# EUROPÄISCHE PATENTANMELDUNG

(11) **EP 2 540 434 A1**
(43) Veröffentlichungstag der Anmeldung: **02.01.2013**
(21) Anmeldenummer: 11171702.1
(22) Anmeldetag: 28.06.2011
(51) Int. Cl.: B23K 26/42, G02B 6/32, G02B 6/38

(54) **Lasersystem mit einem elektrooptischen Anschlusselement**

(71) Anmelder: Trumpf Laser Marking Systems AG, 7214 Grüsch (CH)
(72) Erfinder: Kruse, Dietmar, 7208 Malans (CH); Büche, Dirk, 7215 Fanas (CH)
(74) Vertreter: Kohler Schmid Möbus

(57) **Zusammenfassung**

Das erfindungsgemäße Lasersystem (1) umfasst eine Laserstrahlquelle (2) zur Erzeugung von Laserstrahlung (3), eine Bearbeitungseinheit (4), aus der die in Freistrahlpropagation durch die Bearbeitungseinheit (4) geführte Laserstrahlung (3) austritt, eine Steuerungseinheit (5) zum Steuern der Laserstrahlquelle (2) und/oder der Bearbeitungseinheit (4), eine optische Transportfaser (6) zum Führen der Laserstrahlung (3) von der Laserstrahlquelle (2) zur Bearbeitungseinheit (4), elektrische Leitungen (7) zum Verbinden der Steuerungseinheit (5) und der Bearbeitungseinheit (4) und ein mit der Bearbeitungseinheit (4) lösbar verbundenes Anschlusselement (10), in dem die Transportfaser (6) und die elektrischen Leitungen (7) enden, wobei das Anschlusselement (10) eine beabstandet zum Austrittsende (11) der Transportfaser (6) angeordnete Strahlaustrittsoptik (12) sowie elektrische Endkontakte (13) der elektrische Leitungen (7) aufweist und wobei die elektrischen Endkontakte (13) des Anschlusselements (10) mit elektrischen Gegenkontakten (14) der Bearbeitungseinheit (4) verbunden sind und die aus dem Austrittsende (11) ausgetretene Laserstrahlung (3) durch die Strahlaustrittsoptik (12) hindurch in die Bearbeitungseinheit (4) eingekoppelt wird.

## Beschreibung

Die Erfindung betrifft ein Lasersystem, insbesondere Laserbeschriftungssystem, mit einer Laserstrahlquelle zur Erzeugung von Laserstrahlung, mit einer Bearbeitungseinheit, aus der die Laserstrahlung austritt, mit einer Steuerungseinheit zum Steuern der Laserstrahlquelle und/oder der Bearbeitungseinheit, mit einer optischen Transportfaser zum Führen der Laserstrahlung von der Laserstrahlquelle zur Bearbeitungseinheit und mit elektrischen Leitungen zum Verbinden der Steuerungseinheit und der Bearbeitungseinheit.

Lasersysteme sind typischerweise zweigeteilt in eine Versorgungseinheit, welche die Laserstrahlquelle und eine Steuerungseinheit beinhaltet, und in eine möglichst kompakte Bearbeitungseinheit, aus der die Laserstrahlung austritt. Diese Zweiteilung gewährleistet, dass die Laserstrahlung auch im Falle begrenzter Platzverhältnisse oder bei wechselnden Einwirkungsorten an den jeweiligen Einwirkungsort gebracht werden kann. Versorgungseinheit und Bearbeitungseinheit sind miteinander verbunden, wobei die Verbindung mindestens eine optische Transportfaser, die die Laserstrahlung von der Laserstrahlquelle zur Bearbeitungseinheit transportiert, und elektrische Leitungen zwischen der Steuerungseinheit und der Bearbeitungseinheit beinhaltet. Die optische Transportfaser und die elektrischen Leitungen können in zwei getrennten Verbindungskabeln oder auch gemeinsam innerhalb eines Hybridkabels geführt sein.

Insbesondere in der Materalbearbeitung kommen Lasersysteme mit hoher Strahlqualität und gleichzeitig hohen Laserleistungen im kW-Bereich bzw. gepulste Lasersysteme mit hohen Pulsspitzenleistungen im kW- bis GW-Bereich zum Einsatz. Unter diesen Bedingungen ist es eine Herausforderung, die hohen Laserleistungen von der Laserstrahlquelle zur Bearbeitungseinheit zu transportieren.

Die Bearbeitungseinheit eines zweigeteilten Lasersystems kann weitere Elemente beinhalten, wie beispielsweise nachgeschaltete Optiken zur Strahlaufweitung und Strahlfokussierung, nichtlineare Kristalle zur Frequenzumwandlung, einen mechanischen Lichtverschluss, eine Einrichtung zur Messung der optischen Leistung, einen optischen Scanner mit Bearbeitungsoptik, einen Schneid- oder Schweißkopf, geeignete Mittel zur Kühlung der Bearbeitungseinheit (Lüfter, Peltierelemente, Wasserleitungen), eine integrierte Absaugung, eine integrierte Zuführung von Bearbeitungsgasen, Laserwarnlampen und/oder ein integriertes Kamerasystem. Die Bearbeitungseinheit kann deshalb oftmals nicht beliebig kompakt ausgeführt werden und ist in vielen Fällen groß, unhandlich und schwer.

Die Handhabung eines zweigeteilten Lasersystems ist erschwert, wenn die Versorgungseinheit untrennbar mit der Bearbeitungseinheit verbunden ist. Dies gilt insbesondere für die Integration des Lasersystems in Maschinen und Anlagen, wobei häufig eingeschränkte Platzverhältnisse herrschen und sich deshalb Verbindungskabel zwischen Versorgungseinheit und Bearbeitungseinheit nur schwerlich verlegen lassen, wenn beide Enden untrennbar mit großen, unhandlichen und schweren Einheiten verbunden sind. Daher sollten Versorgungseinheit und Bearbeitungseinheit voneinander trennbar sein. Dieses gilt sowohl für die mindestens eine optische Transportfaser, die die Laserstrahlung von der Laserstrahlquelle zur Bearbeitungseinheit transportiert, als auch für die elektrischen Verbindungen zwischen Steuerungseinheit und Bearbeitungseinheit.

Um die Bearbeitungseinheit sowohl optisch als auch elektrisch mit der Versorgungseinheit zu verbinden, werden Hybrid-Steckverbindungen ähnlich wie in EP 2 003 477 A1 verwendet. Zur Übertragung von Laserstrahlung hoher Strahlqualität mittels optischer Faser muss diese einen geringen Faserkerndurchmesser besitzen. Dies erschwert die Anwendung der in EP 2 003 477 A1 beschriebenen Faser-Faser-Kopplung, da die geringen Faserkerndurchmesser eine sehr genaue relative Positionierung der Faserenden zueinander erfordern. Bei hohen Laserleistungen bzw. Pulsspitzenleistungen sind die Anforderungen an die Positioniergenauigkeit weiter erhöht, da die hohen Laserleistungen bei fehlerhafter Positionierung nicht vollständig in den gegenüberliegenden Faserkern eingekoppelt werden und Beschädigungen hervorrufen können. Die geringen Faserkerndurchmesser haben außerdem sehr hohe Leistungsdichten innerhalb des Faserkerns zur Folge. Verunreinigungen auf den Faserenden sind dadurch besonders kritisch, weil sie die Zerstörschwelle herabsetzen und zu Einbränden auf den Faserenden führen können. Des Weiteren ist eine Faser-Faser-Kopplung immer mit einer Verschlechterung der Strahlqualität verbunden. Die in EP 2 003 477 A1 beschriebene Hybrid-Steckverbindung ist deshalb für Laserstrahlung hoher Strahlqualität und hoher Laserleistung, insbesondere bei gepulsten Lasern mit hohen Pulsspitzenleistung von größer als 1 kW oder 10 kW, nicht geeignet.

Es ist daher die Aufgabe der Erfindung, ein zweigeteiltes Lasersystem mit einer von Laserstrahlquelle und Steuerungseinheit trennbaren Bearbeitungseinheit derart weiterzubilden, dass Laserstrahlung hoher Strahlqualität und hoher Laserleistung, insbesondere mit hohen Pulsspitzenleistung von größer als 1 kW oder 10 kW, übertragen werden kann und das Lasersystem dabei besonders kompakt, kostengünstig und einfach integrierbar ist

Diese Aufgabe wird erfindungsgemäß durch ein Lasersystem mit den Merkmalen von Patentanspruch 1 gelöst.

Erfindungsgemäß erfolgt mithilfe eines elektrooptischen Anschlusselements eine Freistrahlkopplung der in der Transportfaser geführten Laserstrahlung in die Bearbeitungseinheit hinein, in der die eingekoppelte Laserstrahlung bis zu ihrem Austritt in Freistrahlpropagation hindurchgeführt ist. Beim Lösen des Anschlusselements von der Bearbeitungseinheit wird nicht nur die optische Verbindung zwischen Laserstrahlquelle und Bearbeitungseinheit getrennt, sondern auch die elektrische Verbindung, über die die Komponenten innerhalb der Bearbeitungseinheit versorgt bzw. gesteuert werden.

Die optische und die elektrische Verbindung können als zwei getrennte Verbindungskabel oder als gemeinsames Hybridkabel ausgeführt sein. Ein solches Hybridkabel bietet Vorteile bzgl. Handhabung, Integrierbarkeit und Kosten, da auf einen Schutzschlauch für die optische Transportfaser verzichtet werden kann und lediglich ein einziges Verbindungskabel verlegt werden muss. Die optische Transportfaser kann beispielsweise in einem Hohlrohr innerhalb eines elektrischen Verbindungskabels geführt sein.

Die beabstandet zum Austrittsende der Transportfaser angeordnete Strahlaustrittsoptik des Anschlusselements kann relativ groß sein. Dieses gilt insbesondere dann, wenn das Anschlusselement zusätzliche Komponenten beinhaltet. So können Laserstrahlquellen hoher Laserleistung bzw. Pulsspitzenleistung einen optischen Isolator am Faserausgang erfordern, um die Laserstrahlquelle vor Rückreflexen zu schützen, insbesondere wenn als Laserstrahlquelle ein Faserlaser verwendet wird. Bei sehr hohen Laserleistungen bzw. Pulsspitzenleistungen können in der Transportfaser nichtlineare Effekte, wie z.B. Selbstphasenmodulation, Raman- und Brillouinstreuung, auftreten, die das Wellenlängenspektrum der Laserstrahlung ungünstig verbreitern oder sogar die Laserstrahlquelle zerstören können. Diese Effekte skalieren mit derjenigen Faserlänge der Transportfaser, durch die die hohen Leistungsdichten propagieren. Sie lassen sich verringern, indem die Transportfaser als Verstärkerfaser ausgeführt wird, so dass erst am Faseraustrittsende die volle Leistungsdichte vorliegt. Alternativ kann ein Laserverstärker an das Ende der Transportfaser angehängt werden, wie in WO 2007/083110 A1 für den Fall eines Faserlasers mit abgesetztem Faserverstärker beschrieben ist. In diesem Fall führt die Transportfaser zwischen Versorgungseinheit und Bearbeitungseinheit eine geringere Leistungsdichte, die erst im Anschluss auf die erforderliche Laserleistung verstärkt wird. Das für den Laserverstärker benötigte Pumplicht kann beispielsweise in einer zusätzlichen optischen Faser von einer in der Versorgungseinheit befindlichen Pumpquelle zum Laserverstärker transportiert werden.

Insbesondere im Falle eines Laserbeschriftungssystems ist die Laserstrahlquelle ein gepulster Laser mit hoher Pulsspitzenleistung von größer als 1 kW oder 10 kW, und vorzugsweise ein Faserlaser.

Ein Laserverstärker innerhalb des Anschlusselements bedingt eine besonders große Strahlaustrittsoptik und stellt eine Wärmequelle dar, da die ihm zugeführte Pumplichtleistung nur zu 50% bis 80% in Laserleistung umgewandelt wird und der restliche Anteil des Pumplichts als Wärme frei wird. Deshalb ist es vorteilhaft, ein Anschlusselement, welches einen Laserverstärker beinhaltet, zu kühlen. Das mit der Trennung zwischen Anschlusselement und Bearbeitungseinheit verfolgte Ziel der besseren Handhabung und Integrierbarkeit lässt sich beispielsweise dadurch erreichen, dass das Anschlusselement wesentlich kleiner und leichter als die Bearbeitungseinheit ist. Um die Baugröße klein zu halten, erfolgt die Kühlung des Anschlusselements in einer bevorzugten Ausführungsform von außen, beispielsweise über direkte Kontaktkühlung an Berührungsflächen zwischen Strahlaustrittselement und gekühlter Bearbeitungseinheit oder durch das Umströmen mit Luft, wobei etwaige Lüfter in die Bearbeitungseinheit oder die umgebende Anlage integriert sein können. Die Bearbeitungseinheit kann beispielsweise passiv (Kühlrippen) oder aktiv (Lüfter) luftgekühlt oder auch wassergekühlt sein.

Ein weiterer Vorteil des erfindungsgemäßen elektrooptischen Anschlusselements besteht darin, dass die elektrische Verbindung eine sehr einfache und kostengünstige Überwachung zulässt, ob das Anschlusselement mit der Bearbeitungseinheit verbunden ist. In einer besonders einfachen Ausführungsform können dazu im verbundenen Zustand zwei einzelne Leitungen der elektrischen Verbindung leitend miteinander verbunden sein. Durch Messung des elektrischen Widerstands zwischen diesen Leitungen erkennt die Steuerungseinheit, ob das Anschlusselement mit der Bearbeitungseinheit verbunden ist. Eine derartige Überwachung dient dazu zu verhindern, dass die Laserstrahlquelle versehentlich betrieben wird, ohne dass deren Anschlusselement mit der Bearbeitungseinheit verbunden ist. In einem solchen Fall könnte gefährliche Laserstrahlung unkontrolliert austreten.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Ausführungsform des erfindungsgemäßen Lasersystems mit einem elektrooptischen Anschlusselement;
- Fig. 2: die elektrooptische Anschlussseite des elektrooptischen An-schlusselements;
- Fign. 3, 4: zwei weitere Ausführungsformen des erfindungsgemäßen La-sersystems mit einem elektrooptischen Anschlusselement;
- Fign. 5 bis 8: unterschiedliche Modifikationen des elektrooptischen An-schlusselements; und
- Fign. 9 bis 11: unterschiedliche Anbindungen des elektrooptischen An-schlusselements an einer Bearbeitungseinheit des Lasersys-tems.

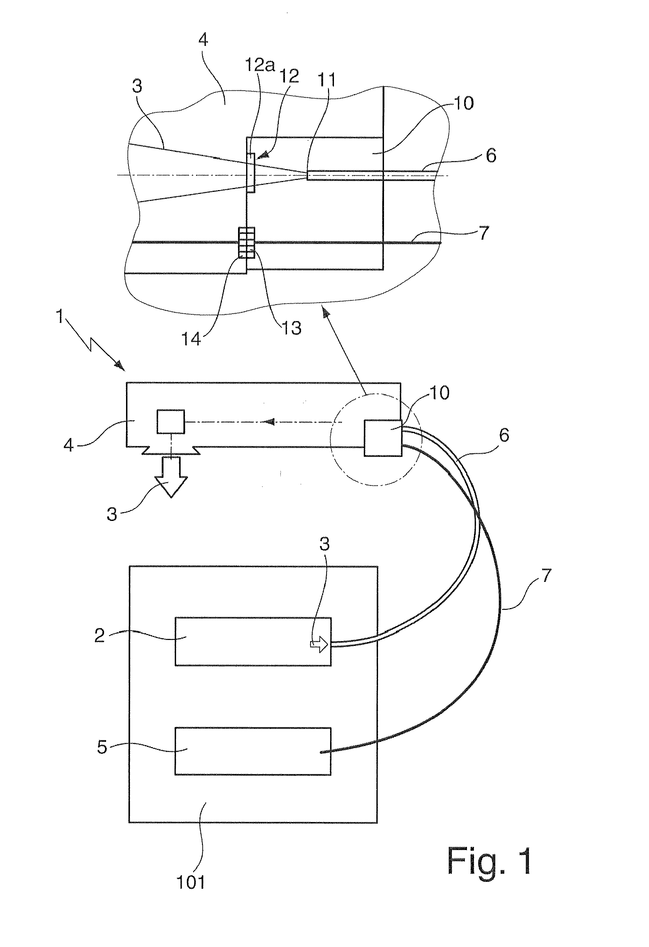

Das in **Fig. 1** gezeigte Lasersystem **1** dient zur Materialbearbeitung und insbesondere zur Beschriftung von Werkstücken.

Das Lasersystem 1 umfasst eine Laserstrahlquelle **2** zur Erzeugung von Laserstrahlung **3**, eine Bearbeitungseinheit (z.B. Bearbeitungskopf) **4**, aus der die in Freistrahlpropagation durch die Bearbeitungseinheit 4 geführte Laserstrahlung 3 dann für die Materialbearbeitung austritt, eine Steuerungseinheit **5** zum Steuern der Laserstrahlquelle 2 und der Bearbeitungseinheit 4, eine optische Transportfaser **6** zum Führen der Laserstrahlung 3 von der Laserstrahlquelle 2 zur Bearbeitungseinheit 4, elektrische Leitungen (z.B. in Form eines elektrischen Kabels) **7** zum Verbinden der Steuerungseinheit 5 und der Bearbeitungseinheit 4. Die Transportfaser 6 und die elektrischen Leitungen 7 enden in einem elektrooptischen Anschlusselement **10**, das mit der Bearbeitungseinheit 4 lösbar verbunden ist. Die Laserstrahlquelle 2 und die Steuerungseinheit 5 sind in einer Versorgungseinheit **101** vorgesehen.

Das Anschlusselement 10 weist eine beabstandet zum Austrittsende **11** der Transportfaser 6 angeordnete Strahlaustrittsoptik **12** sowie elektrische Endkontakte (z.B. Steckkontakte) **13** der elektrischen Leitungen 7 auf. Im gezeigten Ausführungsbeispiel ist die Strahlaustrittsoptik 12 durch ein Schutzglas **12a** gebildet. Bei korrekt mit der Bearbeitungseinheit 4 verbundenem Anschlusselement 10 kontaktieren die elektrischen Endkontakte 13 entsprechende Gegenkontakte **14** der Bearbeitungseinheit 4, und die aus dem Austrittsende 11 ausgetretene divergente Laserstrahlung 3 wird durch die Strahlaustrittsoptik 12 hindurch in die Bearbeitungseinheit 4 eingekoppelt, in der sich die Laserstrahlung 3 bis zu ihrem Austritt in Freistrahlpropagation ausbreitet. Durch Messung des elektrischen Widerstands zwischen einzelnen elektrischen Leitungen 7 erkennt die Steuerungseinheit 5, ob das Anschlusselement 10 korrekt über die Kontakte 13, 14 mit der Bearbeitungseinheit verbunden ist, und verhindert bei nicht korrekter Verbindung, dass die Laserstrahlquelle 2 betrieben wird und Laserstrahlung 3 unkontrolliert aus dem Anschlusselement 10 austritt.

Die Bearbeitungseinheit 4 kann weiterhin beispielsweise Laserwarnlampen, einen elektrisch angesteuerten mechanischen Lichtverschluss, eine elektrisch angesteuerte Kühlung, einen optischen Scanner zum Ablenken der Laserstrahlung, ein integriertes Kamerasystem und eine elektrisch versorgte und betriebene Sensorik aufweisen.

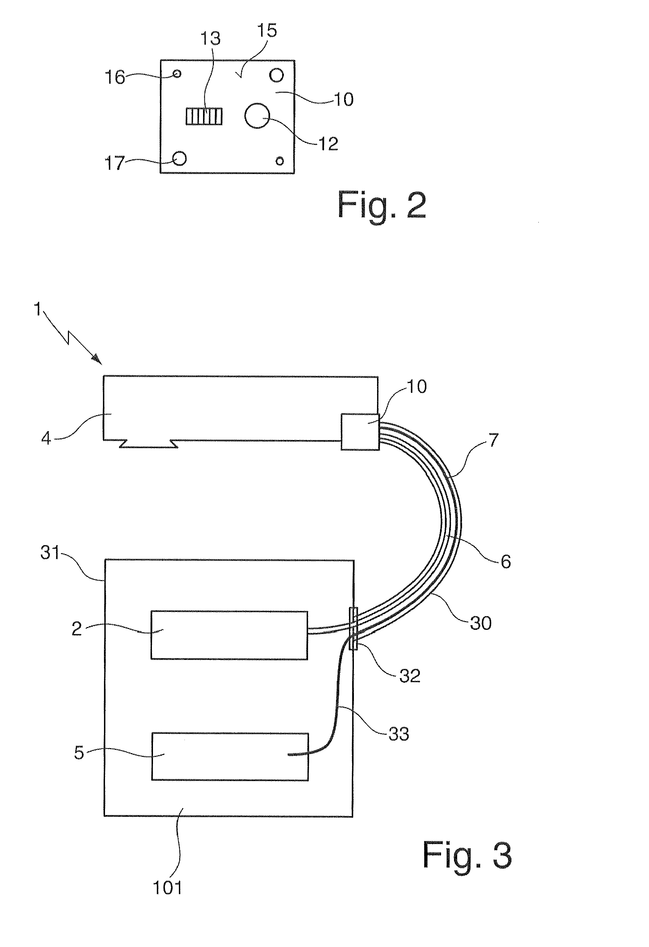

**Fig. 2** zeigt die elektrooptische Anschlussseite **15** des Anschlusselements 10, also die Verbindungsfläche zwischen Anschlusselement 10 und Bearbeitungseinheit 4. Die Anschlussseite 15 weist einen optischen Ausgang mit der Strahlaustrittsoptik 12, einen elektrischen Ausgang mit den elektrischen Endkontakten 13 sowie zum Fixieren an der Bearbeitungseinheit 4 zwei Positionsstifte **16** und zwei Schraublöcher **17** auf. Die Positionsstifte 16 geben eine eindeutige Positionierung des Anschlusselements 10 bezüglich der Bearbeitungseinheit 4 vor, so dass ein schneller Austausch ohne Justage möglich wird. Alternativ kann die genaue Positionierung beispielsweise auch über Konusverbindungen oder anderweitig ausgeführte genaue Anschläge realisiert sein. Weiter ist auch eine Klemmung mit zusätzlicher Kodierung möglich. Der elektrische Ausgang beinhaltet elektrische Zuführungen für den Betrieb der Bearbeitungseinheit 4.

Wie in **Fig. 3** gezeigt, können die Transportfaser 6 und die elektrischen Leitungen 7 gemeinsam als Hybridkabel **30** ausgebildet sein. Ein solches Hybridkabel bietet Vorteile bzgl. Handhabung, Integrierbarkeit und Kosten, da auf einen Schutzschlauch für die Transportfaser 6 verzichtet werden kann und lediglich ein einziges Verbindungskabel verlegt werden muss. Die Transportfaser 6 kann beispielsweise in einem Hohlrohr innerhalb eines elektrischen Verbindungskabels geführt sein. Das Hybridkabel 30 ist an einen am Gehäuse **31** der Versorgungseinheit 101 vorgesehenen Hybridkabelanschluss **32** angeschlossen, der über zusätzliche elektrische Leitungen **33** mit der Steuerungseinheit 5 verbunden ist.

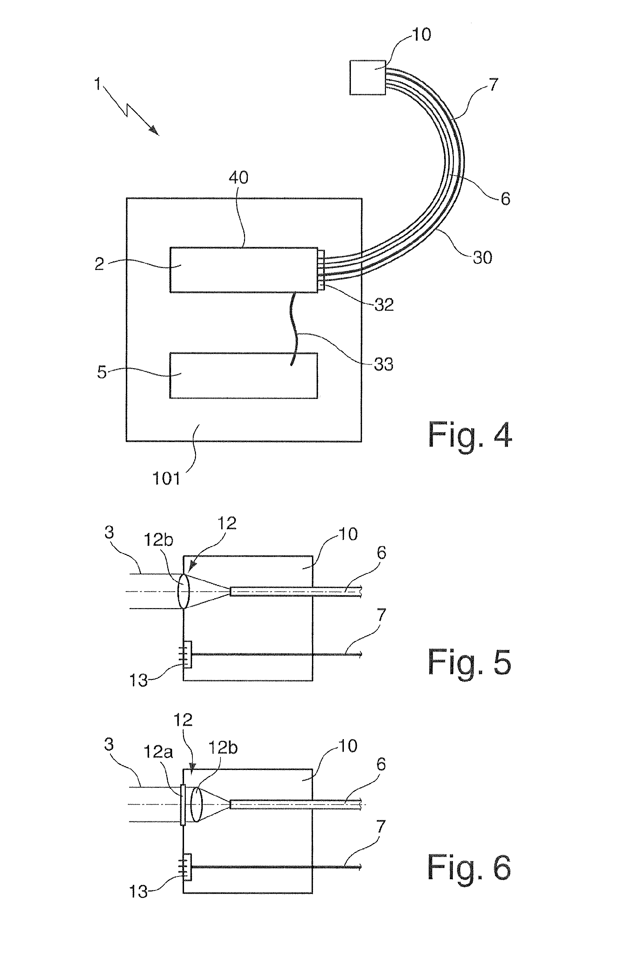

Im Unterschied zur Fig. 3 verlaufen in **Fig. 4** die zusätzlichen elektrischen Leitungen 33 durch die Laserstrahlquelle 2, sind also durch die Laserstrahlquelle 2 hindurchgeschlauft. Die Laserstrahlquelle 2 weist elektrische Ein- und/oder Ausgänge auf, die innerhalb der Laserstrahlquelle 2 keine Funktionen bedienen, sondern direkt in das Hybridkabel 30 führen, um mit der Bearbeitungseinheit 4 verbunden zu werden. Dieses bietet Vorteile bzgl. der Ausführung des Hybridkabels 30. Im Servicefall ist der Ausbau der Laserstrahlquelle 2 einfach, da die zusätzlichen elektrischen Leitungen 33 durch einen separaten Stecker (nicht gezeigt) in das Gehäuse **40** der Laserstrahlquelle 2 hineingeführt werden und das Hybridkabel 30 direkt mittels des Hybridkabelanschlusses 32 mit dem Gehäuse 40 der Laserstrahlquelle 2 verschraubt werden kann.

Im Unterschied zur Fig. 1 ist in **Fig. 5** die Strahlaustrittsoptik 12 durch eine Kollimationsoptik (z.B. in Form einer Kollimationslinse) **12b** gebildet, um die austretende Laserstrahlung 3 zu kollimieren. In **Fig. 6** ist eine Kombination aus Kollimationsoptik 12b und Schutzglas 12a gezeigt. Dadurch wird einerseits die austretende Laserstrahlung 3 kollimiert, und andererseits kann das Schutzglas 12a im Falle von Verschmutzung oder Beschädigung einfach getauscht werden, da die Anforderungen an das Schutzglas 12a bzgl. Positionierung deutlich geringer sind als an die Kollimationsoptik 12b.

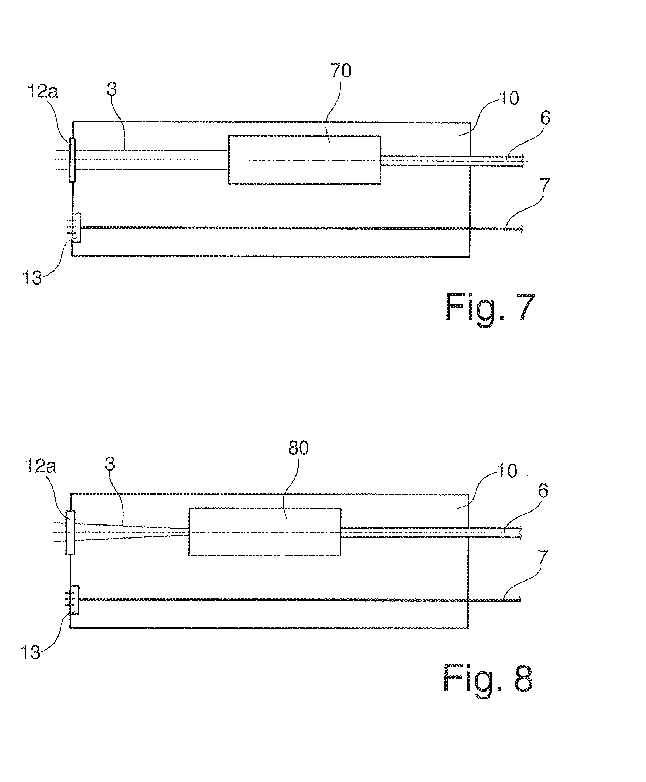

Das in **Fig. 7** gezeigte Anschlusselement 10 weist am Ende der Transportfaser 6 einen optischen Isolator **70** auf, um die Laserstrahlquelle 2 vor Rückreflexen zu schützen. Statt wie gezeigt kollimiert kann die Laserstrahlung 3 auch divergent aus dem optischen Isolator 70 austreten.

Das in **Fig. 8** gezeigte Anschlusselement 10 weist am Ende der Transportfaser 6 einen Laserverstärker **80** auf, um die mit geringerer Leistungsdichte durch die Transportfaser 6 geführte Laserstrahlung 3 nach der Transportfaser 6 auf die erforderliche Laserleistung zu verstärken. Das für den Laserverstärker 80 benötigte Pumplicht kann beispielsweise in einer zusätzlichen optischen Faser (nicht gezeigt) von einer in der Versorgungseinheit befindlichen Pumpquelle zum Laserverstärker 10 transportiert werden. Im gezeigten Ausführungsbeispiel tritt die Laserstrahlung 3 divergent aus dem Schutzglas 12a aus. Das Anschlusselement 10 kann zusätzlich auch einen dem Laserverstärker 80 nachgeschalteten optischen Isolator aufweisen.

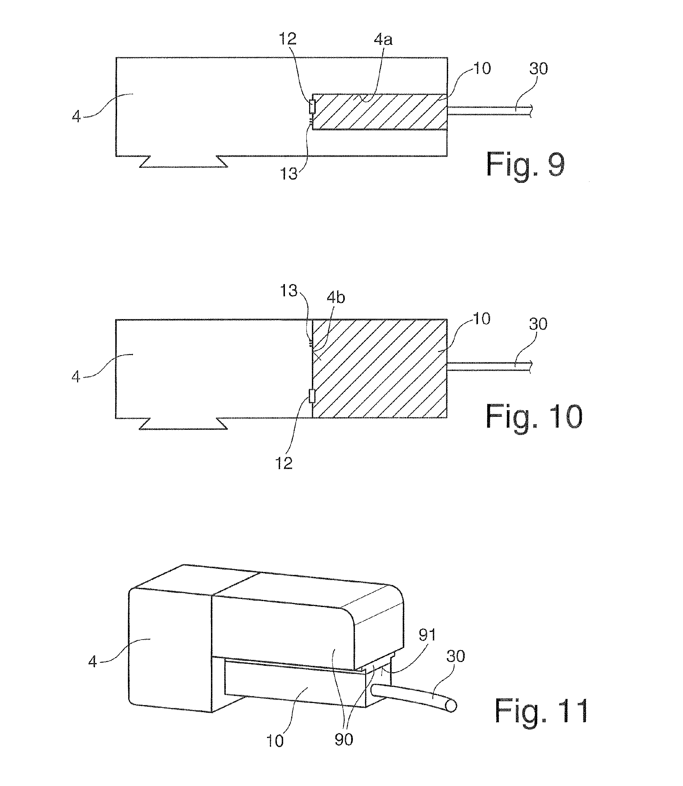

Wie in **Fig. 9** gezeigt, kann das Anschlusselement 10 vollständig in einen Schacht **4a** der Bearbeitungseinheit 4 eingeschoben sein und bündig oder alternativ nichtbündig (nicht gezeigt) mit der Bearbeitungseinheit 4 abschließen. Alternativ kann das Anschlusselement 10 auch, wie in **Fig. 10** gezeigt, an der rückseitigen Wand **4b** der Bearbeitungseinheit 4 montiert sein.

In **Fig. 11** weist die Bearbeitungseinheit 4 einen Kühlkörper **90** auf, an dem das Anschlusselement 10 mit einer Anlageseite **91** anliegt. Der Kühlkörper 90 kann beispielsweise passiv über Kühlrippen oder aktiv mithilfe eines Lüfters luftgekühlt oder auch wassergekühlt sein.

## Patentansprüche

1. Lasersystem (1), insbesondere Laserbeschriftungssystem,
mit einer Laserstrahlquelle (2) zur Erzeugung von Laserstrahlung (3), mit einer Bearbeitungseinheit (4), aus der die in Freistrahlpropagation durch die Bearbeitungseinheit (4) geführte Laserstrahlung (3) austritt, mit einer Steuerungseinheit (5) zum Steuern der Laserstrahlquelle (2) und/oder der Bearbeitungseinheit (4),
mit einer optischen Transportfaser (6) zum Führen der Laserstrahlung (3) von der Laserstrahlquelle (2) zur Bearbeitungseinheit (4),
mit elektrischen Leitungen (7) zum Verbinden der Steuerungseinheit (5) und der Bearbeitungseinheit (4), und
mit einem mit der Bearbeitungseinheit (4) lösbar verbundenen Anschlusselement (10), in dem die Transportfaser (6) und die elektrischen Leitungen (7) enden,
wobei das Anschlusselement (10) eine beabstandet zum Austrittsende (11) der Transportfaser (6) angeordnete Strahlaustrittsoptik (12) sowie elektrische Endkontakte (13) der elektrischen Leitungen (7) aufweist und wobei die elektrischen Endkontakte (13) des Anschlusselements (10) mit elektrischen Gegenkontakten (14) der Bearbeitungseinheit (4) verbunden sind und die aus dem Austrittsende (11) ausgetretene Laserstrahlung (3) durch die Strahlaustrittsoptik (12) hindurch in die Bearbeitungseinheit (4) eingekoppelt wird.

2. Lasersystem nach Anspruch 1, **dadurch gekennzeichnet, dass** die Transportfaser (6) und die elektrischen Leitungen (7) gemeinsam als Hybridkabel (20) ausgebildet sind.

3. Lasersystem nach Anspruch 2, **dadurch gekennzeichnet, dass** das Hybridkabel (20) an einen am Gehäuse (40) der Laserstrahlquelle (2) vorgesehenen Hybridkabelanschluss (32) angeschlossen ist und elektrische Leitungen (33) der Steuerungseinheit (5) durch die Laserstrahlquelle (2) bis zum Hybridkabelanschluss (32) durchgeschlauft sind.

4. Lasersystem nach einem der vorherigen Ansprüche, **dadurch gekennzeichnet, dass** die Strahlaustrittsoptik (12) durch ein Schutzglas (12a), durch eine Kollimationsoptik (12b) oder durch eine Kombination aus Schutzglas (12a) und Kollimationsoptik (12b) gebildet ist.

5. Lasersystem nach einem der vorherigen Ansprüche, **dadurch gekennzeichnet, dass** das Anschlusselement (10) zwischen dem Austrittsende (11) der Transportfaser (6) und der Strahlaustrittsoptik (12) einen optischen Isolator (70) aufweist.

6. Lasersystem nach einem der vorherigen Ansprüche, **dadurch gekennzeichnet, dass** das Anschlusselement (10) zwischen dem Austrittsende (11) der Transportfaser (6) und der Strahlaustrittsoptik (12) einen Laserverstärker (80) aufweist.

7. Lasersystem nach einem der vorherigen Ansprüche, **dadurch gekennzeichnet, dass** das Anschlusselement (10) zumindest teilweise, vorzugsweise vollständig, versenkt in der Bearbeitungseinheit (4) angeordnet ist.

8. Lasersystem nach einem der vorherigen Ansprüche, **dadurch gekennzeichnet, dass** das Anschlusselement (10) an einer Rückseite (4b) der Bearbeitungseinheit (4) montiert ist.

9. Lasersystem nach einem der vorherigen Ansprüche, **dadurch gekennzeichnet, dass** das Anschlusselement (10) durch die Bearbeitungseinheit (4) gekühlt ist.

10. Lasersystem nach einem der vorherigen Ansprüche, **dadurch gekennzeichnet, dass** die Laserstrahlquelle (2) ein gepulster Laser mit einer Pulsspitzenleistung von mindestens 1 kW, bevorzugt von mindestens 10 kW, ist.

11. Lasersystem nach einem der vorherigen Ansprüche, **dadurch gekennzeichnet, dass** die Laserstrahlquelle (2) ein Faserlaser ist.

12. Lasersystem nach einem der vorherigen Ansprüche, **dadurch gekennzeichnet, dass** die Laserstrahlquelle (2) und die Steuerungseinheit (5) in einer Versorgungseinheit (101) vorgesehen sind.
